# EUROPÄISCHE PATENTSCHRIFT

(11) **EP 0 641 582 B1**
(45) Veröffentlichungstag und Bekanntmachung des Hinweises auf die Patenterteilung: **22.04.1998**
(21) Anmeldenummer: 93114384.6
(22) Anmeldetag: 08.09.1993
(51) Int. Cl.: B01D 3/08, B01D 1/30, B01L 9/04

(54) **Rotationsverdampfer**
Rotary evaporator
Evaporateur rotatif

(43) Veröffentlichungstag der Anmeldung: 08.03.1995
(73) Patentinhaber: RESONA INNOVATION AG, CH-9202 Gossau (CH)
(72) Erfinder: Zellweger, Adolf, CH-9202 Gossau (CH)
(74) Vertreter: Göbel, Matthias, Dipl.-Ing.

(56) Entgegenhaltungen:
- EP-A- 0 149 972

## Beschreibung

Die Erfindung betrifft einen Rotationsverdampfer mit einem in ein Heizbad ein- oder ausbewegbaren und mit einem motorischen Antrieb zu Drehbewegungen koppelbaren Verdampferkolben, einem Kühler sowie mindestens einem Auffangkolben für das Destillat.

Bekanntlich finden bei Rotationsverdampfern kugelförmige und birnenförmige Verdampfer- und Auffangkolben aus gläsernem Werkstoff Anwendung. Durch die kugel- oder kugelähnliche Form sind die Kolben in der Handhabung unsicher und schwierig. Besondere Schwierigkeiten stellen sich beim Umgang mit großvolumigen Verdampfer- und Auffangkolben ein. So Zeigt sich insbesondere der Wechselvorgang eines großvolumigen Verdampferkolbens über dem Heizbad durch die Möglichkeit eines Entgleitens als Gefahrenpotential für den Anwender. Fernerhin ist den Verdampfer- und Auffangkolben der Nachteil gemeinsam, daß diese infolge fehlender Stellflächen ein vom Rotationsverdampfer getrenntes kippfreies Abstellen unmöglich machen, was sich z.B. bei Wechsel- und Reinigungsvorgängen bzw. vorbestimmten örtlichen Platzierungen oder Umplatzierungen störend bemerkbar macht.

Es ist Aufgabe der Erfindung Maßnahmen zum einfachen und sicheren Handhaben von Verdampfer- und Auffangkolben in Rotationsverdampfern sowie zum sicheren Aufstellen derselben, etwa bei Wechselvorgängen und Platzierungsänderungen, zu schaffen.

Der Erfindung gemäß hat diese Aufgabe dadurch eine Lösung gefunden, daß das Heizbad relativ zum Verdampferkolben vertikal verschieb- und/oder verschwenkbar ist, daß zwischen Heizbad und Verdampferkolben ein am Gehäuse oder dem Heizbad feststellbarer Träger für den Verdampferkolben einbringbar und der Verdampferkolben durch den Träger oberhalb des Heizbades abstützbar ist. Vermittels des Trägers ist der Verdampferkolben im Abstand oberhalb des Heizbades sicher haltbar und durch den Anwender gefahrlos zu handhaben. Bevorzugt kann der Träger durch zwei an den Verdampferkolben tangential anstellbare und an gehäusefeste Führungen nebeneinander parallel verschieblich und feststellbar gelagerte stabförmige Körper gebildet sein. Die verschiebliche Ausbildung der stabförmigen Körper gibt die Möglichkeit einer Anpassung des Trägers an in ihren Abmessungen unterschiedlich großen VerdampferKolben. Von Vorteil hat sich gezeigt, wenn der Träger in der Freigabestellung für den Verdampferkolben fixierbar ist und somit hinderungsfreie Bewegungen des Hebesystems für das Heizbad erlaubt. Zweckmäßig sind fernerhin durch den Träger in der Endstellung betätigbare Endschalter bei Anwendung von motorischen Hebesystemen für das Heizbad vorgesehen.

Nach weiterer Ausbildung des Rotationsverdampfers kann der Träger in beliebig anderer Weise, z.B. durch eine verschieb- und/oder verschwenkbare Bühne mit geometrischer Profilform gebildet sein kann. Als Bühne ist ein vermittels einer gehäusefesten Stange od.dgl. getragener Ringkörper denkbar, dessen Mittelöffnung entweder frei oder mit einem als Stützfläche für den Verdampferkolben dienenden Geflecht, Gewebe od.dgl. ringkörperfest ausgefüllt ist. Auch ist denkbar, als Träger eine zwischen Verdampferkolben und Heizbad frei einschieb- und/oder einschwenkbare Platte, Konsole od.dgl. zu verwenden. Die Handhabung der Vorrichtung läßt sich weiter dadurch vereinfachen, wenn der Träger für den Verdampferkolben zur oder über die Vorderseite der Vorrichtung zur Verlängerung, z.B. teleskopartig ausziehbar bzw. ausfahrbar ist. Hierdurch kann der von seinem motorischen Antrieb gelöste Verdampferkolben zu weiteren Handhabungen vom Gefahrenbereich des Heizbades entfernt werden.

Der Verdampferkolben selbst ist vorzugsweise vermittels eines kolbenfesten hohlzylindrischen Halses mit dem Rotationsantrieb koppelbar, wobei der Hals an seinem freien Ende eine Verbreiterung, z.B. einen Flansch aufweist, der ebenso wie die zugeordnete motorische Koppelfläche des Rotationsantriebes kugelabschnittsförmig gestaltet ist. Die Anordnung von kugelabschnittsförmigen Koppelflächen ermöglicht den Verdampferkolben auf dem Träger behinderungsfrei von und zur motorischen Koppelfläche des Rotationsantriebes zu schwenken, was sich bei Wechsel- und Reinigungsvorgängen bzw. Füll- und Entleerungsvorgängen vorteilhaft auswirkt. Sichere Entkopplungs- und Kopplungsvorgänge des Verdampferkolbens lassen sich auch dann herbeiführen, wenn der Träger für den Verdampferkolben mindestens teilweise verschieb- oder verschwenkbar ist. Durch Verschieben oder Verschwenken des Trägers bzw. von Teilen desselben ist der Verdampferkolben behinderungsfrei vom motorischen Rotationsantrieb zu entkoppeln bzw. an diesem anzubringen.

In Fortbildung des Rotationsverdampfer ist vorgesehen, daß der Auffangkolben eine kugelförmige Gestalt aufweist und durch eine Cassette od.dgl. umfaßt sowie vermittels der Cassette in oder am Gehäuse positionier- bzw. transportierbar ist. Als Cassette kann, z.B. eine im wesentlichen u-förmige Klammer dienen, deren Stegteil eine ebene Stellfläche für den kugelformigen Auffangkolben bildet, während die beiden Schenkel eine durch Auffangkolbenabschnitte durchgreifbare oben offene schlitzförmige Öffnung aufweisen und bei dem die neben den Öffnungen sich erstreckenden Schenkelabschnitte als Stützglieder an den Auffangkolben anlegbar sind. Die auf diese Weise einfach gestaltete Cassette eignet sich insbesondere für klein- und mittelvolumige Auffangkolben und erlaubt durch einfaches Einstecken des Kolbens von der Oberseite her, dessen Aufnahme. Zweckmäßig sind die Schenkelabschnitte mit Vorspannung an dem Auffangkolben angelegt und die freien Enden der Schenkelabschnitte zur sicheren Fixierung der Cassette zueinander eingebogen und über Teilbereiche des Auffangkolbens hinweggeführt. Von besonderem Vorteil hat sich weiter gezeigt, wenn die schlitzförmigen Öffnungen der Schenkelabschnitte unten durch zu Handgriffen ausgebogene Streifenteile begrenzt sind, wodurch die Cassette einschließlich des darin untergebrachten Auffangkolbens sicher erfaßbar und tragbar ist.

Die Cassette für den Auffangkolben kann auch beliebig anderweitig, z.B. durch einen im wesentlichen u-förmigen Mantel gebildet sein, dessen Stegteil wiederum eine ebene Stellfläche für den Auffangkolben bildet und dessen beide Schenkel eine durch Auffangkolbenabschnitte durchgreifbare, oben offene streifenförmige Öffnung aufweisen, wobei Stegteil bzw. Schenkel eine anheb- oder absenkbare Konsole als Stellfläche, insbesondere für großvolumige Auffangkolben ein- und feststellbar halten und bei dem an den freien Enden der Schenkel bzw. Schenkelabschnitte ein mit einer Durchführungsöffnung für den Hals des Auffangkolbens versehener Deckelteil abnehmbar fest angeordnet ist. Die Schenkel der u-förmigen Klammer üben dabei eine Doppelfunktion dadurch aus, daß sie als Halteglieder für den Auffangkolben und als Durchblickfenster zur Betrachtung des Auffangkolbens dienlich sind. Eine kippfreie Unterbringung des Auffangkolbens in der Cassette wird noch unterstützt durch eine in der Konsole ausgebildete kreisförmige Öffnung für den Durchgriff eines Auffangkolbenabschnitts.

Es ist fernerhin denkbar, die Cassette mit Auffangkolben frei unter oder neben der Vorrichtung aufzustellen. Von Vorteil ist jedoch, wenn die Cassette an zwei verdampfergehäusefesten Tragarmen an- bzw. einhängbar ist und daß in dieser Position der Auffangkolben mit dem Kühler verbindbar ist. Die Tragarme können einfach durch die Schenkel eines u-förmigen Bügels gebildet sein, dessen Steg mit dem Gehäuse fest verbunden ist. Die Cassette ist dabei unmittelbar gleitend oder vermittels Rollen auf den Tragarmen verschieb- bzw. verfahrbar. Die Anordnung von Rollen zeigt sich vorteilhaft bei großvolumigen und gewichtigen Auffangkolben. Durch die Anordnung von über ihre freien Enden ausfahr- oder ausziehbaren bzw. mit verschraubbaren Verlängerungen versehenen Tragarmen ist das Anbringen der Cassette am Gehäuse einfach durchführbar.

Bevorzugt sind die Rollen an den einander zugewandten Seiten der Tragarme drehfest anzuordnen, derart, daß sich die Rollebenen derselben oberhalb der Oberkanten der beiden Tragarme erstrecken. Die zusätzliche Anordnung eines Anschlagpuffers für die Cassette und/oder Auffangkolbens aus einem flexiblen oder federnd elastischen Werkstoff trägt zur Verhinderung von Beschädigungen der Cassette bzw. des Auffangkolbens bei Aufschiebevorgängen bei.

Es versteht sich, daß die durch den u-förmigen Mantel und den Deckelteil gebildete Cassette aus einem beliebigen Werkstoff, z.B. metallischen Werkstoff oder durch ein Kunststoffformteil, z.B. Spritzteil, Tiefziehteil, Polyester-Formteil usw., gefertigt sein kann. Auch läßt sich eine günstige Fixierung des Auffangkolbens in der Cassette dadurch erzielen, wenn die Schenkel des im wesentlichen u-förmigen Mantels starr ausgebildet sind und auf den einander zugewandten Seiten, den Auffangkolben in der Cassette fixierende, Federglieder aufweisen.

Es entspricht dem Wesen der Erfindung, daß auch der Verdampferkolben in eine Cassette einbringbar und vermittels dieser frei und sicher gehandhabt und abstellbar ist.

Die Erfindung ist anhand eines Ausführungsbeispiels in der Zeichnung verdeutlicht. Es zeigen:
- Fig. 1: einen Rotationsverdampfer perspektivisch,
- Fig. 2: einen Verdampferkolben mit Träger und Heizbad im Schnitt,
- Fig. 3: einen Verdampferkolben mit Träger und Heizbad in Draufsicht,
- Fig. 4: einen Verdampferkolben mit Träger und Heizbad im Schnitt,
- Fig. 5: einen Auffangkolben mit Cassette im Schnitt,
- Fig. 6: einen Auffangkolben mit Cassette gemäß Fig. 5, in Vorderansicht,
- Fig. 7: einen Auffangkolben mit einer Cassette gemäß einer anderen Ausführungsform, im Schnitt,
- Fig. 8: eine Cassette gemäß Fig. 7 mit Auffangkolben und Trageeinrichtung in Vorderansicht,
- Fig. 9: eine Trageeinrichtung für eine Cassette in Seitenansicht,
- Fig. 10: eine Trageeinrichtung für eine Cassette gemäß Fig. 9 in Draufsicht,
- Fig. 11: ein Teilstück eines Auffangkolbens, teilweise im Schnitt,
- Fig. 12: ein Teilstück eines in der Länge veränderbaren Trägers, vergrößert und
- Fig. 13: ein abgewandelter Träger in Draufsicht.

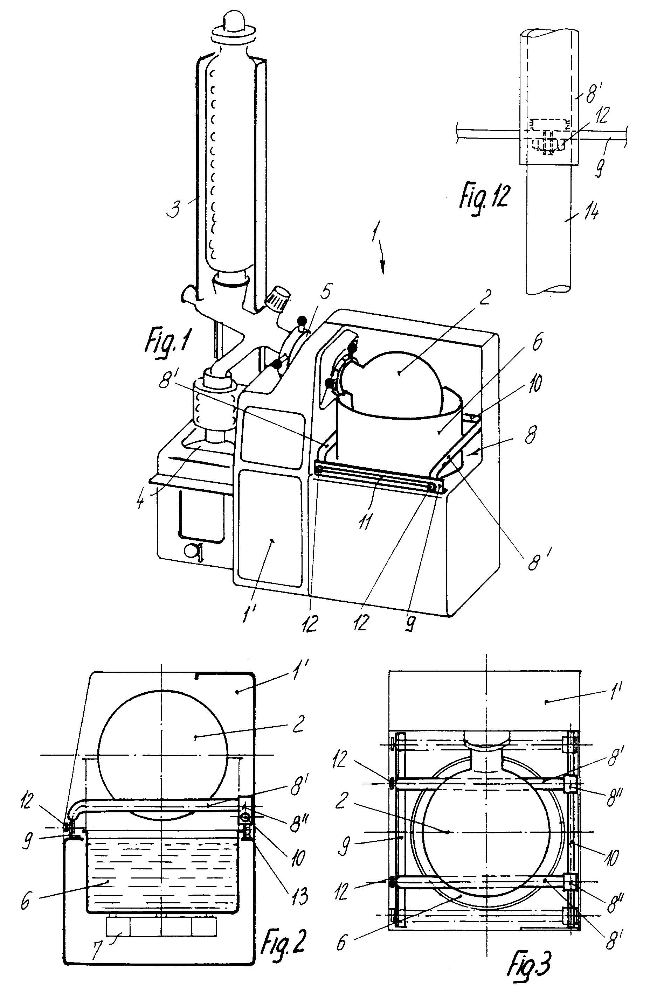

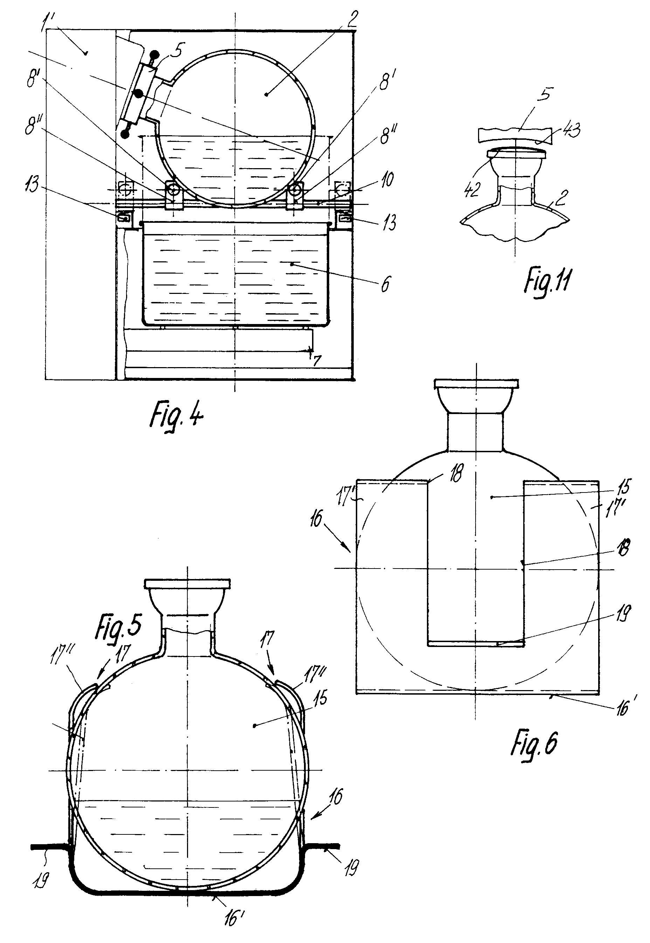

In den Fig. ist mit 1' das Gehäuse eines Rotationsverdampfers 1 bezeichnet, der einen kugelförmigen Verdampferkolben 2, einen Kühler 3 und einen kugelförmigen Auffangkolben 4 aufweist. Der Verdampferkolben 2 ist mit einem motorischen Rotationsantrieb 5 verbindbar bzw. zu Handhabungen vom Rotationsantrieb trennbar. Dem Verdampferkolben 2 ist ein Heizbad 6, z.B. Wasser- oder Ölbad zugeordnet, das beim Ausführungsbeispiel auf einer Konsole 7 (Fig. 2 und 4) aufgestellt und motorisch oder manuell in der Vertikalen verstellbar ist. Der Verdampferkolben 2 ist zu Destillationsvorgängen in das Heizbad 6 einzubringen. Zu leichten und sicheren Handhabungen des Verdampferkolbens 2 ist beim Ausführungsbeispiel das Heizbad 6 vermittels der Konsole 7 aus der in der Fig. 1 gezeigten Arbeitsstellung in die Ruhestellung der Fig. 2 und 4 absenkbar und in den Bereich zwischen Verdampferkolben 2 und Heizbad 6 ein den Verdampferkolben 2 stützender Träger 8 einbringbar.

In den Fig. 1 bis 4 ist der Träger 8 durch zwei parallele stabförmige Körper 8' gebildet, die mit ihren Enden an gehäusefeste Führungen 9 und 10 verschiebbar fest angreifen. Die Führung 9 weist zwei Schlitze 11 auf, die durch an den stabförmigen Körpern 8' angeordneten Gewindeansätzen 12 durchgriffen sind, die Klemmuttern tragen. Die Führung 10 ist durch eine Schiene oder einen Stab gebildet, die durch an den stabförmigen Körpern 8' angeordneten Hülsen 8'' (Fig.3) verschieblich umfaßt sind. An den Verdampferkolben 2 sind die stabförmigen Körper 8' tangential anstellbar (Fig.3 und 4) und vermittels der Gewindeansätze 12 fixierbar. In dieser Position ist der Verdampferkolben 2 bei abgesenktem Heizbad 6 durch den Träger 8 im Abstand oberhalb des Heizbades 6 gehalten und z.B. vom motorischen Rotationsantrieb 5 nach Lösung der Verbindung durch Schwenkung trennbar, was durch kugelabschnittsförmige Trennflächen 42,43 an Verdampferkolben und RotationsAntrieb 5 erleichtert wird. Logischerweise sind die Körper 8' über ihren gesamten Verschiebebereich an den Führungen 9,10 fixierbar. Den stabförmigen Körpern 8' sind in den Bereichen ihrer äusseren Endstellungen im Stromkreis des Antriebsmotorhebesystems (nicht gezeigt) für den Anhebevorgang des Heizbades 6 liegende Endschalter 13 zugeordnet, wodurch beim Auflaufen der stabförmigen Körper 8' ein behinderungsfreies motorisches Anheben des Heizbades 6 in die Arbeitsstellung der Fig. 1 sichergestellt ist. Über die Dauer der Nichtbetätigung der Endschalter 13 bleibt durch diese der Stromkreis des Antriebsmotors für den Anhebevorgang unterbrochen, wodurch ein Anhebevorgang des Heizbades 6 verhindert wird.

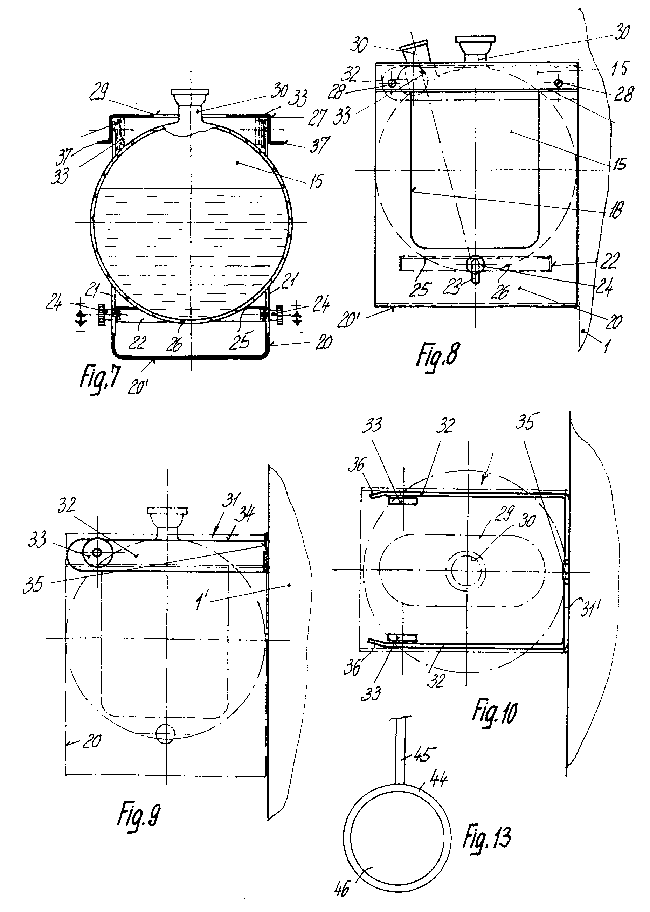

Während beim Ausführungsbeispiel der Fig. 1 bis 4 die stabförmigen Körper 8' im Bereich der Vorderseite des Gehäuses 1' des Rotationsverdampfers 1 enden, sind die stabförmigen Körper 8' der Fig. 12 durch ausziehbare Körper nach vorne über das Gehäuse 1' teleskopartig verlängerbar, wodurch der Verdampferkolben 2 nach seiner Trennung vom motorischen Rotationsantrieb 5 nach vorne über die Verlängerungen 14 aus dem Bereich des Heizbades 6 entfernbar bzw. zum Anbringen an den motorischen Rotationsantrieb 5 über die Verlängerungen 14 auf die stabförmigen Körper 8' sicher aufschiebbar ist. In Fig. 13 ist ein durch einen Ringkörper 44 gebildeter Träger erkennbar, der durch eine Stange 45, z.B. verschwenkbar am Verdampfergehäuse 1' gehalten ist. Der Ringkörper 44 kann durch ein Geflecht 46 ausgefüllt sein.

In den Fig. 5 und 6 ist ein Auffangkolben 15 für einen Rotationsverdampfer 1 gezeigt, der kugelförmig aus gläsernem Werkstoff gebildet und durch eine vereinfachte Cassette umfaßt ist. Als Cassette dient eine im wesentlichen u-förmige Klammer 16, deren Stegteil 16' eine weitgehend ebene Stellfläche bildet und deren Schenkel 17 den Auffangkolben 15 kippfrei stützen. Die Schenkel 17 weisen hierzu am oberen Ende offene schlitzförmige Öffnungen 18 auf. Über das offene Ende der Klammer 16 ist der Auffangkolben 15 von oben her in der Klammer 16 einschiebbar, wobei der Auffangkolben 18 mit Teilabschnitten durch die Öffnungen 18 greift. Die neben den Öffnungen 18 befindlichen Schenkelabschnitte 17' sind bevorzugt federnd elastisch ausgebildet und liegen mit Vorspannung an den Auffangkolben 15 an (Fig. 5). Außerdem sind die Schenkelabschnitte 17' an den freien Enden 17'' in Richtung zueinander eingebogen, wodurch ein unbeabsichtigtes Herausgleiten des Auffangkolbens 15 aus der Klammer 16 nach oben verhindert wird. Die Klammer 16 ist bevorzugt aus einem metallischen Werkstoff oder einem Kunststoff gebildet. Am unteren Ende sind die Öffnungen 18 durch streifenförmige Ausbiegungen 19 begrenzt, die als Handgriffe zur besseren Mobilität von Cassette und Auffangkolben 15 dienen.

In Fig. 7 ist ein, z.B. großvolumiger Auffangkolben 15 mit Kugelform in einen als Cassette dienende u-förmigen Mantel 20 eingeschoben und auf eine an den Schenkeln 21 als untere Abstützung angeordnete Konsole 22 aufgestellt. Die Konsole 22 ist durch in Schlitzen 23 der Schenkel geführten Stellschrauben 24 in verschiedenen Höhen an den Schenkeln 21 feststellbar. Eine kippfreie Abstützung des Auffangkolbens 15 im Mantel 20 ist durch die Anordnung einer kreisförmigen Öffnung 25 in der Konsole 22 sowie Öffnungen 18 in den Schenkeln 21 erreicht, die durch Abschnitte 26 des Auffangkolbens 15 durchgriffen sind. Am oberen Ende ist der Mantel 20 durch einen Deckelteil 27 verschließbar, der durch Schrauben 28 am Mantel 20 festgelegt ist. Eine Öffnung 29 im Deckelteil 27 ermöglichst die Durchführung des mit dem Kühler 38 zu verbindenden Halses 30 des Auffangkolbens 15. Bei der so gebildeten Cassette bildet der weitgehend ebene Stegteil 20' des Mantels 20 wiederum eine Stellfläche, wodurch Cassette und Auffangkolben 15 beliebig unabhängig gehandhabt und auch sicher abstellbar sind.

Die Cassette der Fig. 7 bis 10 ist durch einen u-förmigen Bügel 31 am Verdampfergehäuse 1' anhängbar. Der hierzu mit seinem Stegteil 31' fest mit dem Verdampfergehäuse 1' verbundene Bügel 31 ermöglicht mit den Schenkeln 32 ein verschiebliches Aufbringen und Stützen der Cassette. Beim Ausführungsbeispiel weisen die Schenkel 32 innenseitig Stützrollen 33 auf, deren Rollebene, wie in Fig. 8 gezeigt, sich geringfügig höher als die Oberkanten 34 der Schenkel 32 erstreckt. Nach dem Anhängen der Cassette an den Schenkeln 32 ist vermittels der Rollen 33 ein leichtgängiges Verbringen von Cassette und Aufnahmekolben 15 in die Arbeitsstellung möglich. Zur Dämpfung und zum Schutze von Cassette und Auffangkolben 15 weist der Halter ein Pufferglied 35 aus einem federnd elastischen oder flexiblen Werkstoff, z.B. Gummi auf. Das Anhängen der Cassette an den Schenkeln 32 ist durch Einbiegungen 36 an diesen erleichtert. Zweckmäßig sind am Deckelteil 27 Randbereiche 37 zur Bildung von Griffteilen nach außen ausgebogen.

## Patentansprüche

1. Rotationsverdampfer mit einem in ein Heizbad ein- oder ausbewegbaren und mit einem motorischen Rotationsantrieb koppelbaren Verdampferkolben, einem Kühler sowie mindestens einem Auffangkolben für das Destillat aufweisenden Gehäuse, dadurch gekennzeichnet, daß das Heizbad (6) relativ zum Verdampferkolben (2) vertikal verschieb- und/oder verschwenkbar ist, daß zwischen Heizbad (6) und Verdampferkolben (2) ein am Gehaüse (1') der dem Heizbad (6) feststellbarer Träger (8) für den Verdampferkolben (2) einbringbar und der Verdampferkolben (2) durch den Träger (8) oberhalb des Heizbades (6) abstützbar ist.

2. Rotationsverdampfer nach Anspruch 1, dadurch gekennzeichnet, daß der Träger (8) durch zwei an den Verdampferkolben (2) tangential anstellbare und an Gehäusefeste Führungen (9,10) nebeneinander parallel verschieblich und feststellbar gelagerte stabförmige Körper (8') gebildet ist. (Fig 1-3)

3. Rotationsverdampfer nach Anspruch 1, dadurch gekennzeichnet, daß der Träger (8) durch eine verschieb- und/oder verschwenkbare Bühne mit geometrischer Profilform gebildet ist.

4. Rotationsverdampfer nach Anspruch 3, dadurch gekennzeichnet, daß die Bühne durch einen vermittels einer gehäusefesten Stange (45) od.dgl. getragenen Ringkörper (44) gebildet ist der durch ein Geflecht (46) ausgefüllt ist. (Fig. 13)

5. Rotationsverdampfer nach Anspruch 4, dadurch gekennzeichnet, daß die Mittelöffnung (46) des Ringkörpers (44) mit einem die Stützfläche für den Verdampferkolben bildenden Geflecht, Gewebe od.dgl. ringkörperfest ausgefüllt ist.

6. Rotationsverdampfer nach Anspruch 1, dadurch gekennzeichnet, daß als Träger (8) eine zwischen Verdampferkolben (2) und Heizbad (6) frei einschieb- und/oder einschwenkbare Platte, Konsole od.dgl. dient.

7. Rotationsverdampfer nach einem der vorhergehenden Ansprüche 1 bis 6, dadurch gekennzeichnet, daß der Träger (8) in der Freigabestellung für den Verdampferkolben (2) fixierbar ist und durch den Träger (8) ein im Stromkreis des motorischen Hebesystem für das Heizbad (6) angeordneter Endschalter (13) betätigbar ist.

8. Rotationsverdampfer nach Anspruch 1,2,3,4 und 6, dadurch gekennzeichnet, daß der Träger (8) für den Verdampferkolben (2) zur oder über die Vorderseite des Verdampfergehäuses (1') zur Verlängerung der Abstützung, z.B. teleskopartig, auszieh- bzw. ausfahrbar ist.

9. Rotationsverdampfer nach Anspruch 1, dadurch gekennzeichnet, daß der Verdampferkolben (2) vermittels eines kolbenfesten hohlzylindrischen Halses mit dem motorischen Rotationsantrieb koppelbar ist, daß der Hals am freien Ende eine Verbreiterung, z.B. Flansch aufweist und daß die Verbreiterung und der motorische Rotationsantrieb kugelabschnittsförmige Koppelflächen (42,43) aufweisen.

10. Rotationsverdampfer nach einem der vorhergehenden Ansprüche 1 bis 9, dadurch gekennzeichnet, daß der Träger (8) für den Verdampferkolben (2) mindestens teilweise zur Kopplung oder Entkopplung von Verdampferkolben (2) und motorischem Rotationsantrieb (5) zum motorischen Rotationsantrieb (5) verschieb- oder verschwenkbar ist.

11. Rotationsverdampfer nach Anspruch 1, dadurch gekennzeichnet, daß der Auffangkolben (15) eine kugelförmige Gestalt aufweist und durch eine Cassette (16 bzw. 20,27) od.dgl. umfaßt sowie vermittels der Cassette in oder am Gehäuse 1' positionier- bzw. transportierbar ist.

12. Rotationsverdampfer nach Anspruch 11, dadurch gekennzeichnet, daß als Cassette eine im wesentlichen u-förmige Klammer (16) dient, deren Stegteil (16') eine ebene Stellfläche für den kugelformigen Auffangkolben (15) bildet und deren beide Schenkel (17) durch Auffangkolbenabschnitte durchgreifbare, oben offene schlitzförmige Öffnungen (18) aufweisen und daß die neben den Öffnungen (18) sich erstreckenden Schenkelabschnitte (17') als Stützglieder an den Auffangkolben (15) anlegbar sind. (Fig. 5 und 6)

13. Rotationsverdampfer nach Anspruch 12, dadurch gekennzeichnet, daß die Schenkelabschnitte (17') mit Vorspannung am Auffangkolben (15) anliegen.

14. Rotationsverdampfer nach Anspruch 12 und 13, dadurch gekennzeichnet, daß die freien Enden (17'') der Schenkelabschnitte (17') zueinander eingebogen sind und die eingebogenen Enden (17'') Teilbereiche des Auffangkolbens (15) übergreifen.

15. Rotationsverdampfer nach Anspruch 12, dadurch gekennzeichnet, daß die schlitzförmigen Öffnungen (18) der Schenkelabschnitte (17') unten durch als Handgriffe dienende streifenförmige Ausbiegungen (19) begrenzt sind.

16. Rotationsverdampfer nach Anspruch 11, dadurch gekennzeichnet, daß die Cassette für den Auffangkolben (15) durch einen im wesentlichen u-förmigen Mantel (20) gebildet ist, dessen Stegteil (20') eine ebene Stellfläche für den Auffangkolben (15) bildet, dessen beide Schenkel (21) durch Auffangkolbenabschnitte durchgreifbare, oben offene streifenförmige Öffnungen (18) aufweisen, die neben den Öffnungen (18) sich erstreckenden Schenkelabschnitte als Stützglieder an den Auffangkolben (15) anlegbar sind, der Stegteil (20') oder die Schenkel (21) eine anheb- und absenkbare Konsole (22) für den Auffangkolben (15) einstell- und feststellbar halten und daß am freien Ende des Mantels (20) ein mit einer Durchführungsöffnung für den Hals des Auffangkolbens (15) versehener Deckelteil (27) abnehmbar und festlegbar angeordnet ist. (Fig.7)

17. Rotationsverdampfer nach Anspruch 16, dadurch gekennzeichnet, daß die in den Schenkeln (21) des Mantels (20) angeordneten Öffnungen (18) als Durchblickfenster ausgebildet sind.

18. Rotationsverdampfer nach Anspruch 16, dadurch gekennzeichnet, daß die durch den Stegteil (20') oder die Schenkel (21) gehaltene Konsole (22) eine kreisförmige Öffnung (25) für den Durchgriff eines Auffangkolbenabschnitts aufweist.

19. Rotationsverdampfer nach Anspruch 16, dadurch gekennzeichnet, daß die Cassette (20,27) an zwei verdampfergehäusefesten Tragarmen an- bzw. einhängbar ist und daß der Auffangkolben (15) bei an- bzw. eingehängter Position der Cassette mit dem Kühler verbindbar ist.

20. Rotationsverdampfer nach Anspruch 19, dadurch gekennzeichnet, daß die Tragarme durch die Schenkel (32) eines u-förmigen Bügels (31) gebildet sind, dessen Stegteil (31') mit dem Verdampfergehäuse (1') fest verbunden ist.

21. Rotationsverdampfer nach Anspruch 19 und 20, dadurch gekennzeichnet, daß die Cassette (20,27) unmittelbar gleitend oder vermittels Stützrollen (33) auf den Schenkeln (32) verschiebbar oder verfahrbar ist.

22. Rotationsverdampfer nach Anspruch 20 und 21, dadurch gekennzeichnet, daß die Cassette (20,27) über die freien Enden der Schenkel (32) auf den Schenkeln (32) aufschiebbar oder von den Schenkeln entnehmbar ist.

23. Rotationsverdampfer nach Anspruch 16 und 19, dadurch gekennzeichnet, daß die Schenkel (32) im Bereich der freien Enden verlängerbar sind, z.B. ausziehbare oder einschraubbare Abschnitte aufweisen.

24. Vorrichtung nach Anspruch 21, dadurch gekennzeichnet, daß die Rollen (33) an den einander zugewandten Seiten der beiden Schenkel (32) drehbar fest angeordnet sind und daß sich die Rollebenen oberhalb der Oberkanten der Schenkel (32) erstrecken.

25. Vorrichtung nach Anspruch 20, dadurch gekennzeichnet, daß der Stegteil (31') des u-förmigen Bügels (31) einen Anschlagpuffer (35) für die Cassette (20,27) und/oder den Auffangkolben (15) aus einem flexiblen oder federnd elastischen Werkstoff fest aufweist.

26. Vorrichtung nach Anspruch 12, dadurch gekennzeichnet, daß der u-förmige Mantel (20) und der Deckelteil (27) der Cassette aus einem metallischen Werkstoff gebildet ist.

27. Vorrichtung nach Anspruch 12, dadurch gekennzeichnet, daß der u-förmige Mantel (20) und der Deckelteil der Cassette (27) durch ein Kunststoffformteil gebildet ist.

28. Vorrichtung nach Anspruch 12, dadurch gekennzeichnet, daß die beiden Schenkel (17) des im wesentlichen u-förmigen Mantels (20) starr ausgebildet sind und daß auf den einander zugewandten Seiten der Schenkel (21) den Auffangkolben (15) in der Cassette fixierende Federglieder od.dgl. angeordnet sind.

29. Vorrichtung nach Anspruch 16, dadurch gekennzeichnet, daß der Deckelteil (27) oder der u-förmige Mantel (20) als Handgriffe dienende ausgebogene Streifenabschnitte (37) aufweisen.

## Claims

1. Rotary evaporator, having an evaporator flask which is displaceable into a heating bath or from a heating bath and is connectable to a mechanical rotary drive, a condenser and at least one housing having a collecting flask for the distillate, characterised in that the heating bath (6) is vertically displaceable and/or pivotable relative to the evaporator flask (2), in that a support (8), which is securable on the housing (1') or the heating bath (6), for supporting the evaporator flask (2) can be introduced between the heating bath (6) and evaporator flask (2), and the evaporator flask (2) is supportable by the support (8) above the heating bath (6).

2. Rotary evaporator according to claim 1, characterised in that the support (8) is formed by two rod-shaped bodies (8'), which are tangentially adjustable on the evaporator flask (2) and are mounted adjacent each other on guide members (9, 10), which are fixed to the housing, so as to be displaceable and securable parallel to each other. (Figs. 1-3)

3. Rotary evaporator according to claim 1, characterised in that the support (8) is formed by a displaceable and/or pivotable platform having a geometrical profile configuration.

4. Rotary evaporator according to claim 3, characterised in that the platform is formed by an annular body (44), which is supported by means of a rod (45) or the like fixed to the housing and is filled by a mesh (46). (Fig. 13)

5. Rotary evaporator according to claim 4, characterised in that the central aperture (46) of the annular body (44) is filled with a mesh, fabric or the like, which forms the supporting face for the evaporator flask, so as to be fixed to the annular body.

6. Rotary evaporator according to claim 1, characterised in that a plate, bracket or the like, which is freely insertable and/or pivotable in position between the evaporator flask (2) and heating bath (6), serves as the support (8).

7. Rotary evaporator according to one of the preceding claims 1 to 6, characterised in that the support (8) is securable in the release position for the evaporator flask (2), and a limit switch (13), which is disposed in the circuit of the mechanical lifting system for the heating bath (6), is actuatable by the support (8).

8. Rotary evaporator according to claims 1, 2, 3, 4 and 6, characterised in that the support (8) for the evaporator flask (2) is extractable or extendable, e.g. in a telescopic manner, relative to or beyond the front side of the evaporator housing (1') to lengthen the support means.

9. Rotary evaporator according to claim 1, characterised in that the evaporator flask (2) is connectable to the mechanical rotary drive by means of a hollow-cylindrical neck secured to the flask, in that the neck has a widened portion, e.g. flange, at its free end, and in that the widened portion and the mechanical rotary drive have spherical-segmental connecting faces (42, 43).

10. Rotary evaporator according to one of the preceding claims 1 to 9, characterised in that the support (8) for the evaporator flask (2) is at least partially displaceable or pivotable relative to the mechanical rotary drive (5) to connect or disconnect the evaporator flask (2) and the mechanical rotary drive (5).

11. Rotary evaporator according to claim 1, characterised in that the collecting flask (15) has a spherical configuration, is surrounded by a holder (16 or respectively 20, 27) or the like, and is positionable or respectively transportable in or on the housing (1') by means of the holder.

12. Rotary evaporator according to claim 11, characterised in that a substantially U-shaped bracket (16) serves as the holder, the cross-piece member (16') of which forms a flat supporting face for the spherical collecting flask (15), and the two arms (17) of which have slot-like apertures (18), which can have collecting flask portions extending therethrough and are open at their upper ends, and in that the arm portions (17'), which extend adjacent the apertures (18), can be fitted onto the collecting flask (15) as supporting members. (Figs. 5 and 6)

13. Rotary evaporator according to claim 12, characterised in that the arm portions (17') abut against the collecting flask (15) with initial tension.

14. Rotary evaporator according to claims 12 and 13, characterised in that the free ends (17'') of the arm portions (17') are bent inwardly towards one another, and the inwardly bent ends (17'') partial regions of the collecting flask (15).

15. Rotary evaporator according to claim 12, characterised in that the slot-like apertures (18) of the arm portions (17') are defined at their lower ends by strip-like outwardly bent portions (19), which serve as handles.

16. Rotary evaporator according to claim 11, characterised in that the holder for the collecting flask (15) is formed by a substatially U-shaped casing (20), the cross-piece member (20') of which forms a flat supporting face for the collecting flask (15), and the two arms (21) of which have strip-like apertures (18), which can have collecting flask portions extending therethrough and are open at their upper ends, in that the arm portions, which extend adjacent the apertures (18), can be fitted onto the collecting flask (15) as supporting members, in that the cross-piece member (20') or the arms (21) retain a raisable and lowerable bracket (22) for the collecting flask (15) in an adjustable and securable manner, and in that a cover portion (27), which is provided with a through-aperture for the neck of the collecting flask (15), is removably and securably disposed on the free end of the casing (20). (Fig. 7)

17. Rotary evaporator according to claim 16, characterised in that the apertures (18), which are provided in the arms (21) of the casing (20), are configured as observation windows.

18. Rotary evaporator according to claim 16, characterised in that the bracket (22), which is retained by the cross-piece member (20') or the arms (21), has a circular aperture (25) for a collecting flask portion to extend therethrough.

19. Rotary evaporator according to claim 16, characterised in that the holder (20, 27) is attachable to, or respectively retainable on, two supporting arms which are fixed to the evaporator housing, and in that the collecting flask (15) is connectable to the condenser when the holder is in its attached or retained position.

20. Rotary evaporator according to claim 19, characterised in that the supporting arms are formed by the arms (32) of a U-shaped clamp (31), the cross-piece member (31') of which is securely connected to the evaporator housing (1').

21. Rotary evaporator according to claims 19 and 20, characterised in that the holder (20, 27) is slidable or displaceable on the arms (32) in a directly sliding manner or by means of supporting rollers (33).

22. Rotary evaporator according to claims 20 and 21, characterised in that the holder (20, 27) can be slipped over the arms (32) or removed from the arms via the free ends of the arms (32).

23. Rotary evaporator according to claims 16 and 19, characterised in that the arms (32) are extendable in the region of the free ends, e.g. they have portions which can be extracted or screwed in position.

24. Apparatus according to claim 21, characterised in that the rollers (33) are rotatably securely disposed on the sides of the two arms (32) facing each other, and in that the rolling planes extend above the upper edges of the arms (32).

25. Apparatus according to claim 20, characterised in that the cross-piece member (31') of the U-shaped clamp (31) securely has a stop buffer (35) for the holder (20, 27) and/or the collecting flask (15) formed from a flexible or resiliently elastic material.

26. Apparatus according to claim 12, characterised in that the U-shaped casing (20) and the cover portion (27) of the holder are formed from a metallic material.

27. Apparatus according to claim 12, characterised in that the U-shaped casing (20) and the cover portion of the holder (27) are formed by a moulded plastics material part.

28. Apparatus according to claim 12, characterised in that the two arms (17) of the substantially U-shaped casing (20) are rigid, and in that resilient members or the like, which secure the collecting flask (15) in the holder, are disposed on the sides of the arms (21) facing each other.

29. Apparatus according to claim 16, characterised in that the cover portion (27) or the U-shaped casing (20) have deflected strip portions (37) serving as handles.

## Revendications

1. Vaporisateur rotatif comportant un ballon de vaporisation pouvant être entré et sorti d'un bain de chauffage et pouvant être couplé à un entraînement rotatif à moteur, un condenseur, ainsi qu'au moins un ballon de réception pour le distillat, et un boîtier,
caractérisé en ce que le bain de chauffage (6) peut être déplacé verticalement et/ou pivoté, relativement au ballon de vaporisation (2), en ce qu'un support (8) pour le ballon de vaporisation (2), pouvant être fixé au boîtier (1') ou au bain de chauffage (6), peut être monté entre le bain de chauffage (6) et le ballon de vaporisation (2), et le ballon de vaporisation (2) peut être supporté par le support (8) au-dessus du bain de chauffage (6).

2. Vaporisateur rotatif selon la revendication 1,
caractérisé en ce que le support (8) est formé par deux corps (8') en forme de tiges, pouvant être mis au contact de façon tangentielle du ballon de vaporisation (2), et montés de façon à pouvoir être déplacés parallèlement l'un à côté de l'autre et être fixés sur des guides (9,10) solidaires du boîtier. (figures 1-3)

3. Vaporisateur rotatif selon la revendication 1,
caractérisé en ce que le support (8) est formé par une plate-forme pouvant être déplacée et/ou pivotée et présentant une forme profilée géométrique.

4. Vaporisateur rotatif selon la revendication 3,
caractérisé en ce que la plate-forme est formée par un corps annulaire (44) porté au moyen d'une tige (45) ou analogue, qui est fixée au boîtier, et rempli par un clayonnage (46). (figure 13)

5. Vaporisateur rotatif selon la revendication 4,
caractérisé en ce que l'ouverture centrale (46) du corps annulaire (44) est remplie, de façon solidaire au corps annulaire, d'un clayonnage, d'une structure ou analogue, formant la face d'appui pour le ballon de vaporisation.

6. Vaporisateur rotatif selon la revendication 1,
caractérisé en ce qu'une plaque, une console ou analogue pouvant être librement entrée et/ou pivotée entre le ballon de vaporisation (2) et le bain de chauffage (6) sert de support (8).

7. Vaporisateur rotatif selon l'une des revendications précédentes 1 à 6,
caractérisé en ce que le support (8) peut être fixé dans la position de libération pour le ballon de vaporisation (2), et par le support (8) peut être actionné un commutateur de fin de course (13) agencé dans le circuit électrique du système de levage à moteur pour le bain de chauffage (6).

8. Vaporisateur rotatif selon l'une des revendications 1, 2, 3, 4 et 6,
caractérisé en ce que le support (8) pour le ballon de vaporisation (2) peut être étiré ou sorti, par rapport ou par l'intermédiaire de la face frontale du boîtier de vaporisateur (1') pour prolonger l'appui, par exemple de façon télescopique.

9. Vaporisateur rotatif selon la revendication 1,
caractérisé en ce que le ballon de vaporisation (2) peut être couplé, au moyen d'un col fixé au ballon et cylindrique creux, à l'entraînement rotatif à moteur, en ce que le col comporte à l'extrémité libre un élargissement, par exemple une bride, et en ce que l'élargissement et l'entraînement rotatif à moteur présentent des faces de couplage (42,43) en forme de tronçon conique.

10. Vaporisateur rotatif selon l'une des revendications précédentes 1 à 9,
caractérisé en ce que le support (8) pour le ballon de vaporisation (2) peut, au moins partiellement, être déplacé ou pivoté vers l'entraînement rotatif (5) à moteur, pour le couplage ou le découplage du ballon de vaporisation (2) et de l'entraînement rotatif (5) à moteur.

11. Vaporisateur rotatif selon la revendication 1,
caractérisé en ce que le ballon de réception (15) présente une forme conique et est entouré par un caisson (16 ou 20,27) ou analogue, et peut être positionné ou transporté au moyen du caisson dans ou sur le boîtier (1').

12. Vaporisateur rotatif selon la revendication 11,
caractérisé en ce qu'une bride (16) essentiellement en forme de U sert de caisson, dont la partie de dos (16') forme une face d'appui plane pour le ballon de réception (15) de forme conique, et dont les deux branches (17) comportent des ouvertures (18) pouvant être traversées par des tronçons de ballon de réception, ouvertes en haut et en forme de fentes, et en ce que les tronçons de branche (17') s'étendant à côté des ouvertures (18) peuvent été mis au contact du ballon de réception (15) comme éléments d'appui. (figures 5 et 6)

13. Vaporisateur rotatif selon la revendication 12,
caractérisé en ce que les tronçons de branche (17') reposent avec une précontrainte contre le ballon de réception (15).

14. Vaporisateur rotatif selon l'une des revendications 12 et 13,
caractérisé en ce que les extrémités libres (17'') des tronçons de branche (17') sont cintrées l'une vers l'autre et les extrémités cintrées (17'') entourent des zones partielles du ballon de réception (15).

15. Vaporisateur rotatif selon la revendication 12,
caractérisé en ce que les ouvertures (18) en forme de fentes des tronçons de branche (17') sont limitées en bas par des plis (19) en forme de bandes, servant de poignées.

16. Vaporisateur rotatif selon la revendication 11,
caractérisé en ce que le caisson pour le ballon de réception (15) est formé par une enveloppe (20) essentiellement en forme de U, dont la partie de dos (20') forme une face d'appui plane pour le ballon de réception (15), dont les deux branches (21) présentent des ouvertures (18) pouvant être traversées par des tronçons de ballon de réception, ouvertes en haut et en forme de bandes, les tronçons de branche s'étendant à côté des ouvertures (18) peuvent être disposés contre le ballon de réception (15) comme éléments d'appui, la partie de dos (20') ou les branches (21) maintiennent, de façon réglable et de façon à pouvoir fixer, une console (22) pouvant être levée et abaissée pour le ballon de réception (15), et en ce qu'à l'extrémité libre de l'enveloppe (20) est agencée, de façon à pouvoir être enlevée et être fixée, une partie de couvercle (27) munie d'une ouverture de passage pour le col du ballon de réception (15). (figure 7)

17. Vaporisateur rotatif selon la revendication 16,
caractérisé en ce que les ouvertures (18) agencées dans les branches (21) de l'enveloppe (20) sont réalisées sous forme de fenêtres de contrôle visuel.

18. Vaporisateur rotatif selon la revendication 16,
caractérisé en ce que la console (22) maintenue par la partie de dos (20') ou les branches (21) présente une ouverture circulaire (25) pour le passage d'un tronçon de ballon de réception.

19. Vaporisateur rotatif selon la revendication 16,
caractérisé en ce que le caisson (20,27) peut être suspendu sur ou dans deux bras porteurs fixés au boîtier de vaporisateur, et en ce que le ballon de réception (15) peut être relié, au condenseur, pour une position suspendue sur ou dans le caisson.

20. Vaporisateur rotatif selon la revendication 19,
caractérisé en ce que les bras porteurs sont formés par les branches (32) d'un étrier (31) en forme de U, dont la partie de dos (31') est solidaire du boîtier de vaporisateur (1').

21. Vaporisateur rotatif selon l'une des revendications 19 et 20,
caractérisé en ce que le caisson (20,27) peut se déplacer ou rouler, directement de façon coulissante ou au moyen de galets d'appui (33), sur les branches (32).

22. Vaporisateur rotatif selon l'une des revendications 20 et 21,
caractérisé en ce que le caisson (20,27) peut être monté, par l'intermédiaire des extrémités libres des branches (32), sur les branches (32) ou être enlevé des branches.

23. Vaporisateur rotatif selon l'une des revendications 16 et 19,
caractérisé en ce que les branches (32) peuvent être prolongées dans la zone des extrémités libres, par exemple être étirées ou présenter des tronçons vissables.

24. Dispositif selon la revendication 21,
caractérisé en ce que les galets (33) sont agencés de façon solidaire en rotation aux faces en regard des deux branches (32), et en ce que les plans de galets s'étendent au-dessus des bords supérieurs des branches (32).

25. Dispositif selon la revendication 20,
caractérisé en ce que la partie de dos (31') de l'étrier (31) en forme de U comporte un butoir (35) fixe, pour le caisson (20,27) et/ou le ballon de réception (15), en un matériau flexible ou élastique.

26. Dispositif selon la revendication 12,
caractérisé en ce que l'enveloppe (20) en forme de U et la partie de couvercle (27) du caisson sont réalisées en un matériau métallique.

27. Dispositif selon la revendication 12,
caractérisé en ce que l'enveloppe (20) en forme de U et la partie de couvercle (27) du caisson sont formées par une pièce en matière synthétique.

28. Dispositif selon la revendication 12,
caractérisé en ce que les deux branches (17) de l'enveloppe (20) essentiellement en forme de U sont réalisées de façon rigide, et en ce que, sur les faces en regard des branches (21), sont agencés des éléments élastiques ou analogues fixant le ballon de réception (15) dans le caisson.

29. Dispositif selon la revendication 16,
caractérisé en ce que la partie de couvercle (27) ou l'enveloppe (20) en forme de U comporte des tronçons de bande (37) cintrés et servant de poignées.
